# EUROPÄISCHE PATENTSCHRIFT

(11) **EP 2 323 792 B1**
(45) Veröffentlichungstag und Bekanntmachung des Hinweises auf die Patenterteilung: **07.09.2016**
(21) Anmeldenummer: 09768833.7
(22) Anmeldetag: 26.06.2009
(51) Int. Cl.: B23B 51/02

(54) **MEHRSCHNEIDIGES BOHRWERKZEUG**
MULTIPLE EDGE DRILL
OUTIL DE PERÇAGE À ARÊTES COUPANTES MULTIPLES

(30) Priorität: 28.06.2008 DE 102008030796; 10.06.2009 DE 102009024597
(43) Veröffentlichungstag der Anmeldung: 25.05.2011
(73) Patentinhaber: Gühring KG, 72458 Albstadt (DE)
(72) Erfinder: GRUBER, Jochen, 72488 Sigmaringen (DE)
(74) Vertreter: Winter, Brandl, Fürniss, Hübner, Röss, Kaiser, Polte - Partnerschaft mbB
(86) Internationale Anmeldenummer: PCT/DE2009/000892
(87) Internationale Veröffentlichungsnummer: WO 2009/155909

(56) Entgegenhaltungen:
- DE-U1- 20 307 258
- DE-U1- 29 919 858

## Beschreibung

Die Erfindung betrifft ein mehrschneidiges Bohrwerkzeug, insbesondere ein Bohrwerkzeug zum Bearbeiten von hochzähen und damit schwer zerspanbaren Werkstoffen, wie z.B. Stahlguss, Vergütungsstahl und sonstigen schwer zerspanbaren Stahl-Werkstoffen einschließlich Gusswerkstoffen, genauer gesagt von metallischen Guss-Werkstoffen, wie beispielsweise Grauguss, und insbesondere von GGV oder ADI-Guss.

Die Entwicklung der Werkstoffe einschließlich der metallischen Gusswerkstoffe ist in den letzten Jahren dadurch gekennzeichnet, dass immer höhere Festigkeiten bei gleichzeitig angehobener Zähigkeit erreicht werden. Im Bereich der metallischen Gusswerkstoffe wird neben dem klassisch eingesetzten Kugelgraphit (GGG) zunehmend Vermiculargraphit (GGV) eingesetzt. Immer häufiger kommt jedoch auch zwischenstufenvergütetes Gusseisen (Austempered Ductile Iron- ADI) mit noch höheren Festigkeits- und Zähigkeitswerten zur Anwendung.

Derartige Werkstoffe sind nur dann wirtschaftlich zu bearbeiten, wenn es gelingt, die Geometrie und den Werkstoff des Werkzeugs derart an die Zerspanungsaufgabe anzupassen, dass sich ausreichende Standzeiten ergeben. Bei der Zerspanung der eingangs genannten Werkstoffe ist das Werkzeug einem verhältnismäßig hohen abrasiven Verschleiß ausgesetzt. Das gilt auch für die zerspanende Bearbeitung von Gusseisengefüge, welches darüber hinaus häufig unregelmäßig aufgebaut ist, d.h. bei dem harte Phasen (wie z. B. Ferrit, Perlit oder Martensit) neben weichen Kohlenstoffeinschlüssen auftreten. Aufgrund des inhomogenen Gefüges ist darüber hinaus darauf zu achten, dass das Werkzeug aufgrund der auftretenden Schwingungen seine Bearbeitungsgenauigkeit nicht einbüßt.

Um den Anforderungen hinsichtlich hoher Härte und Verschleißfestigkeit einerseits sowie hinsichtlich Zähigkeit und Dauerschwingbelastbarkeit andererseits gerecht zu werden, hat man Bohrwerkzeuge zum Bearbeiten von schwer zerspanbaren Werkstoffen, einschließlich Gusswerkstoffen, bereits aus Vollhartmetall der Klasse K30 bis K40 nach Klassifizierung ISO 513 eingesetzt. Um dabei die Zerspanungsleistung, d.h. die erzielbaren Schnittgeschwindigkeiten und Vorschübe noch zu steigern, hat man sogar Feinst- bzw. Ultrafeinkorn-Hartmetalle mit Korngrößen der WC-Kristalle kleiner 0,8 µm verwendet.

In der eigenen älteren Patentschrift EP 1 622 735 B1 ist ein Bohrwerkzeug der eingangs beschriebenen Art offenbart, bei dem die Hauptschneide von der Schneidenecke ausgehend in Axialrichtung unter einem Radius stetig konvex gekrümmt verläuft. Auf diese Weise wird die Hauptschneide verlängert, wodurch es gelingt, den auf der Schneide lastenden Druck etwas zu verringern. Ähnliche Ansätze sind in den Dokumenten US 3,443,459, EP 0591 122 A1, US 4,116,580 bzw. US 1,309,706 gezeigt.

Im Stand der Technik gemäß EP 1 622 735 B1 wird zur Verbesserung der Wirtschaftlichkeit des Herstellungsverfahrens eines gattungsgemäßen Bohrwerkzeugs, das sich durch eine besonders gute Standzeit und Bearbeitungsgenauigkeit auszeichnet, vorgeschlagen, die Freiflächen facettenartig, d.h. geteilt nach Art eines Vier-Flächenanschliffs auszubilden. Hierdurch ergibt sich allerdings gleichzeitig eine gewisse Einschränkung hinsichtlich der Kinematik, die beim Anschleifen des Werkzeugs zum Einsatz kommt. Mit modernen CNC-Maschinen lässt sich die konvexe Hauptschneide äußerst exakt mit der erforderlichen Punktsymmetrie der Hauptschneiden zur Bohrerachse herstellen. Allerdings sind nicht alle Anwender mit ausreichend komplexen Werkzeugmaschinen ausgestattet, so dass ein Nachschleifen dieser bekannten Werkzeuge beim Anwender oftmals auf Schwierigkeiten stößt.

Aus dem Dokument DE 299 19 858 U1 ist ein mehrschneidiges Bohrwerkzeug gemäß dem Oberbegriff des Patentanspruchs 1 bekannt geworden. geworden, bei dem eine dreiphasige Bohrspitze ausgebildet ist und somit - vom Bohrerzentrum ausgehend - zwei aneinander grenzende Hauptschneidenabschnitte unterschiedlich große Spitzenwinkel definieren. Allerdings ist die Lage des Knicks zwischen diesen Hauptschneidenabschnitten nicht näher festgelegt. Vielmehr ist diese beispielsweise davon abhängig, wie lang eine dritte Auslaufschneidkante (Auslaufphase) ist.

Der Erfindung liegt deshalb die Aufgabe zugrunde, ein mehrschneidiges Bohrwerkzeug der eingangs beschriebenen Art in der Weise weiterzubilden, dass es sich im Besonderen zur Bearbeitung von hochzähen Werkstoffen, wie z.B. Stahlguss, Vergütungsstahl oder sonstigen schwer zerspanbaren Stahl-Werkstoffen einschließlich von metallischen Guss-Werkstoffen, wie beispielsweise Grauguss, und insbesondere von GGV oder ADI-Guss eignet und unter Beibehaltung extrem hoher Standzeit und großer Bearbeitungsgenauigkeit, d.h. bei geringer Schwingungsneigung, leichter herstellbar und beliebig oft nachschleifbar ist.

Diese Aufgabe wird durch die Merkmale des Anspruchs 1 gelöst.

Erfindungsgemäß erfährt die Hauptschneide eine Umgestaltung dahingehend, dass sie zwei unterschiedliche Spitzenwinkel des Bohrwerkzeugs definiert. Der äußere ebenso wie der innere Hauptschneidenabschnitt können somit individuell durch einen vereinfachten Anschliff, d.h. mit vereinfachter Schleif-Kinematik, hergestellt werden. Die erfindungsgemäße Gestaltung eröffnet die Möglichkeit, den Anschliff ausschließlich durch ebene Flächen, d.h. durch ebene Freiflächen und gegebenenfalls durch ebene Ausspitzungsflächen, herzustellen, wodurch es insbesondere erleichtert wird, das Werkzeug ohne Einbußen der Zentrierfähigkeit, auf einfacheren Maschinen nachzuschleifen. Dabei hat die mit dem Knick versehene Hauptschneide nach wie vor den Vorteil, dass die Last pro Hauptschneidenlängeneinheit verhältnismäßig klein bleibt. Mit der erfindungsgemäßen Positionierung der Knickstelle zwischen den beiden Hauptschneidenabschnitten ergibt sich eine möglichst große Verlängerung der Hauptschneide außerhalb des Bohrerkerns, wodurch die Belastungsspitzen der Schneide wirksam abgesenkt werden können. Mit dieser Gestaltung werden die unter einem verschieden großen Winkel zur Achse des Bohrers verlaufenden Hauptschneidenabschnitte außerhalb des Bohrerkerns in etwa gleich groß, wodurch sich die Belastung der Schneide vergleichmäßigen lässt.

Darüber hinaus wird durch die erfindungsgemäße Gestaltung Material eingespart, da der im Zentrum verhältnismäßig große Spitzenwinkel den Abstand von der Bohrerspitze zum Schneideneck erheblich verkürzt. Deshalb eignet sich das erfindungsgemäße Bohrwerkzeug im Besonderen für die Ausgestaltung als Hartstoff-Bohrwerkzeug, bei dem entweder das gesamte Bohrwerkzeug oder zumindest diejenigen Bereiche, welche die höchst belasteten Schneidenbereiche ausbilden, aus einem Hartstoff, wie z. B. Vollhartmetall, Cermet, Schneidkeramiken usw. ausgebildet sind. Das erfindungsgemäße Bohrwerkzeug kann auch in der Weise ausgebildet sein, dass die an der Spanbildung hauptsächlich beteiligten Bereiche des Bohrwerkzeugs von Schneideinsätzen bzw. einem einzigen Schneideinsatz gebildet sind.

Umfangreiche Versuche mit unterschiedlichen Bohrer-Spitzengeometrien haben gezeigt, dass sich besonders gute Standzeiten des Werkzeugs dann erzielen lassen, wenn der radial äußere Hauptschneidenabschnitt (24) einen Spitzenwinkel (WSPA) im Bereich zwischen 95 und 130°, vorzugsweise im Bereich zwischen 115 und 125°, und der radial innere Hauptschneidenabschnitt (22) einen Spitzenwinkel (WSPI) im Bereich zwischen 130 bis 150°, vorzugsweise von etwa 140° definiert. Mit dieser Geometrie gelingt es, den Verschleiß an den Schneidenecken, an der Spanfläche und an der Freifläche zu minimieren. Für die Zerspanung von extrem zähen Werkstoffen, wie etwa Vergütungsstahl (z.B. 42CrMo4) hat sich ein Spitzenwinkel (WSPA) für den radial äußeren Hauptschneidenabschnitt (24) nahe der oberen Grenze (125°) als besonders vorteilhaft herausgestellt. Die am Schneideneck wirkenden Radialkräfte können bei solchen Geometrien besser beherrscht werden, was sich positiv auf den Standweg des Werkzeugs bei der Zerspanung besonders zäher Werkstoffe auswirkt. Für die Bearbeitung von Stahl-Gusswerkstoffen kann ein Wert von 100° für den Spitzenwinkel (WSPA) des radial äußeren Hauptschneidenabschnitts (24) bereits gute Ergebnisse sicherstellen. Im Vergleich zu einem Spitzenanschliff nach DIN 1412 Form D ergibt sich hier bereits eine wesentliche Verkürzung des axialen Abstands zwischen der Bohrerspitze und dem Schneideneck. Dadurch wird nicht nur Material, beispielsweise Material für einen gegebenenfalls verwendeten Hartstoff, eingespart, sondern gleichzeitig dafür gesorgt, dass die entscheidenden Stellen der Bohrerspitze, d.h. das Zentrum und das Schneideneck, besonders effektiv mit Kühl-/Schmiermittel versorgt werden können. Diese Versorgung ist insbesondere dann verbessert, wenn das Werkzeug mit innenliegenden Kühl-/Schmiermittelkanälen ausgestattet ist.

Vorteilhafte Ausgestaltungen sind Gegenstand der Unteransprüche.

Wenn der radial innere Hauptschneidenabschnitt in axialer Richtung von der Bohrerspitze betrachtet zum Bohrerzentrum hin abgewinkelt verläuft, wird die Spanbildung im Zentrum des Bohrers positiv beeinflusst, was es erlaubt, die Schnittkräfte selbst bei sehr schwer zu zerspanenden metallischen Werkstoffen, einschließlich Gusswerkstoffen, besser zu beherrschen und die Schwingungsneigung des Werkzeugs zu reduzieren.

Mit der Weiterbildung des Anspruchs 3 kann eine weitere spürbare Verschleißverringerung an der Hauptschneide, an der Freifläche und an der Spanfläche sichergestellt werden.

Wenn gemäß Anspruch 4 eine Ausspitzung nach Art eines Kreuzanschliffs vorgesehen ist, ergibt sich eine weitere Vereinfachung der Anschliffgeometrie. Mit anderen Worten, der gesamte Anschliff des Bohrwerkzeugs lässt sich mit ebenen Flächen definieren, so dass ausschließlich lineare Bewegungen der ebenfalls vom Profil her vereinfachten Schleifwerkzeuge erforderlich sind. Dies schafft die Voraussetzung dafür, dass auch die Anschliffgenauigkeit selbst bei einfacherer Ausgestaltung der Werkzeugmaschine, verbessert werden kann. Es ist auf diese Weise möglich, die Schneiden exakt symmetrisch auszubilden und die Querschneide auf ein Minimum in der Nähe des Bohrerzentrums zu beschränken, so dass sich ein Bohrwerkzeug mit hervorragender Zentrierfähigkeit ergibt.

Weil die Kinematik beim Anschleifen des Bohrwerkzeugs vereinfacht ist, können auch auf wirtschaftliche Weise sehr schwer zu zerspanende Hartstoffe für das Bohrwerkzeug verwendet werden, ohne Gefahr zu laufen, bei der Bearbeitung des Hartstoffs, d.h. bei der Herstellung des Anschliffs, unzulässige Abweichungen von der theoretischen Anschliffgeometrie zu erzeugen.

Mit der Weiterbildung des Anspruchs 5 kann im Bereich eines jeden Hauptschneidenabschnitts ein optimal orientierter Keilwinkel ausgebildet werden, so dass sich über die Gesamtschneide betrachtet ein Schnittverhalten erzeugen lässt, das zu einer weiter verbesserten Vergleichmäßigung der Beanspruchung des Materials führt. Punktuelle Überbeanspruchungen des Bohrwerkzeugs werden auf diese Weise ausgeschlossen, so dass die Lebensdauer des Werkzeugs insgesamt verbessert wird.

Durch die Ausgestaltung der Hauptfreiflächen nach Anspruch 6 wird die Voraussetzung dafür geschaffen, dass bei innenliegender Kühl-/Schmiermittelversorgung ein zusätzlicher Freiraum für das Kühl-/Schmiermittel geschaffen wird, der den Zutritt des Kühl-/Schmiermittels zur Hauptschneide einschließlich des im Bohrerkern befindlichen Hauptschneidenabschnitts erheblich verbessert. Diese Maßnahme ist insbesondere dann von besonderem Vorteil, wenn das Werkzeug mit so genannter Minimalmengenschmierung (MMS-Technologie) betrieben wird, bei der im Wesentlichen Pressluft unter hohem Druck und mit feinsten Schmiermitteltröpfchen versetzt, also ein Aerosol, durch die innenliegenden Kühlkanäle geleitet und aus den Hauptfreiflächen austritt, auf die Schneiden trifft und durch die Spannut zusammen mit den Spänen abgeleitet wird.

Die Gestaltung der Hauptschneide ist in weiten Grenzen variierbar, um eine Anpassung an das individuell vorliegende Gefüge des zu zerspanenden Werkstoffs vorzunehmen. Es hat sich allerdings gezeigt, dass es für die Bearbeitung von besonders zähen und hochfesten Gusswerkstoffen von Vorteil ist, zumindest den radial äußeren Hauptschneidenabschnitt bei Betrachtung des Werkzeugs in axialer Richtung, konvex zu gestalten.

Für die Bearbeitung von Werkstoffen mit besonders zähem Gefüge, wie z.B. von Vergütungsstahl-Sorten, ist die Weiterbildung des Anspruchs 8 von besonderem Vorteil. Es konnte anhand von Versuchen gezeugt werden, dass es mit dieser Gestaltung gelingt, den Schneidenverschleiß durch günstigere Spanbildung weiter spürbar zu verringern.

Eine Verbesserung der Kühlung bzw. Schmierung der an der Spanbildung beteiligten Abschnitte des Bohrwerkzeugs ergibt sich mit der Weiterbildung des Anspruchs 9.

Über einen Freischliff nach Anspruch 10 lässt sich das aus den innenliegenden Kühl-/Schmiermittelkanälen austretende Kühl-/Schmiermittel-Fluid bei Bedarf und gezielt zu den Stellen leiten, die bei der Zerspanung besonders hohem Verschleiß ausgesetzt sind.

Wenn das Bohrwerkzeug nach Anspruch 11 im Bereich des Schneidenecks mit einer Fase ausgebildet wird, deren Erstreckung in radialer Richtung im Bereich zwischen 0,05 und 0,07xD und deren Erstreckung in Umfangsrichtung im Bereich zwischen 0,025 und 0,035xD liegt, wobei D den Nenndurchmesser des Bohrwerkzeugs bezeichnet, lässt sich der Schneideneckverschleiß noch einmal reduzieren, ohne die Spanbildung negativ zu beeinflussen. Die konkrete Geometrie für die Fase wird werkstoffabhängig gewählt.

Für die Gestaltung des Schneidteils des Bohrwerkzeugs ist ein großer Spielraum gegeben. Das Werkzeug kann als gerade genutetes Werkzeug ausgebildet sein. Aufgrund der besonders hohen Zerspankraft des Werkzeugs und der besonders guten Schneidenstabilität kann es sogar als wendelförmig genutetes Werkzeug ausgebildet werden.

Als Werkstoff für das erfindungsgemäße Werkzeug kommen alle gängigen Werkzeugstähle, insbesondere Schnellarbeitsstähle wie HSS, HSS-E, HSS-PM, HSS-E-PM, HS6-5-2, HS6-5-3, HS6-5-2-5, HS10-4-3-10, HS2-9-2 oder HS2-9-1-8 in Frage. Für das Bohrwerkzeug insgesamt bzw. für diejenigen Abschnitte des Bohrwerkzeugs, die an der Spanbildung hauptsächlich beteiligt sind, können aber auch vorteilhafterweise auch Hartstoffe eingesetzt werden. Es können im Grunde genommen alle gängigen und besonders hochfesten Hartstoffe verwendet werden, beispielsweise solche, die in der älteren europäischen Patentschrift 1 622 735 B1 der Anmelderin beschrieben sind. Der Inhalt dieses Dokuments wird hiermit ausdrücklich in den Offenbarungsgehalt dieser Anmeldung miteinbezogen. Wenn das Werkzeug in seiner Gesamtheit aus Hartstoff, wie z.B. aus Vollhartmetall (VHM) besteht, ergibt sich eine besonders große Stabilität, die zur Eindämmung von Schwingungen und damit zu einer gesteigerten Bearbeitungsgenauigkeit führt.

Selbstverständlich ist es auch möglich, das erfindungsgemäße Bohrwerkzeug in denjenigen Bereichen, die besonderen Beanspruchungen ausgesetzt sind, mit einer geeigneten Beschichtung zu versehen, die sowohl eine Weichschicht als auch eine Hartschicht umfassen kann. In diesem Zusammenhang kann beispielsweise auf Beschichtungen zurückgegriffen werden, wie sie von der Anmelderin unter den Bezeichnungen "A-Schicht", "Super-A-Schicht", "C-Schicht", "F-Schicht", "P-Schicht", "S-Schicht" oder "M-Schicht" vertrieben werden.

Weitere vorteilhafte Ausgestaltungen sind Gegenstand der übrigen Unteransprüche.

Nachstehend wird anhand schematischer Zeichnungen ein Ausführungsbeispiel der Erfindung näher erläutert. Es zeigen:
Fig. 1 eine Seitenansicht einer Ausführungsform des mehrteiligen Bohrwerkzeugs;
Fig. 2 in vergrößertem Maßstab eine Stirnansicht des Werkzeugs gemäß Fig. 1;
Fig. 3 eine stark vergrößerte Ansicht der Darstellung gemäß Fig. 2;
Fig. 4 die Einzelheit IV in Fig. 3;
Fig. 5 eine Ansicht des Bohrwerkzeugs bei einer Blickrichtung entlang des Pfeils "V" in Fig. 2;
Fig. 6 eine Ansicht des Bohrwerkzeugs bei einer Blickrichtung entlang des Pfeils "VI" in Fig. 2;
Fig. 7 eine Ansicht des Bohrwerkzeugs bei einer Blickrichtung entlang des Pfeils "VII" in Fig. 2;
Fig. 8 eine perspektivische Ansicht des Werkzeugs im Maßstab der Fign. 2 und 5 bis 7 bei einer Blickrichtung entlang einer Achse, die parallel zu einer Ausspitzungsfläche einerseits und zu einer Ebene verläuft, die einen Hauptschneiden-Zentrumsabschnitt enthält;
Fig. 9 eine der Figur 3 entsprechende Ansicht einer weiteren Ausführungsform des Werkzeugs;
Fig. 10 eine der Figur 5 entsprechende Ansicht des Werkzeugs nach Fig. 9;
Fig. 11 die Einzelheit "XI" in Figur 9; und
Fig. 12 eine der Figur 9 entsprechende Ansicht einer weiteren Ausführungsform des Werkzeugs.

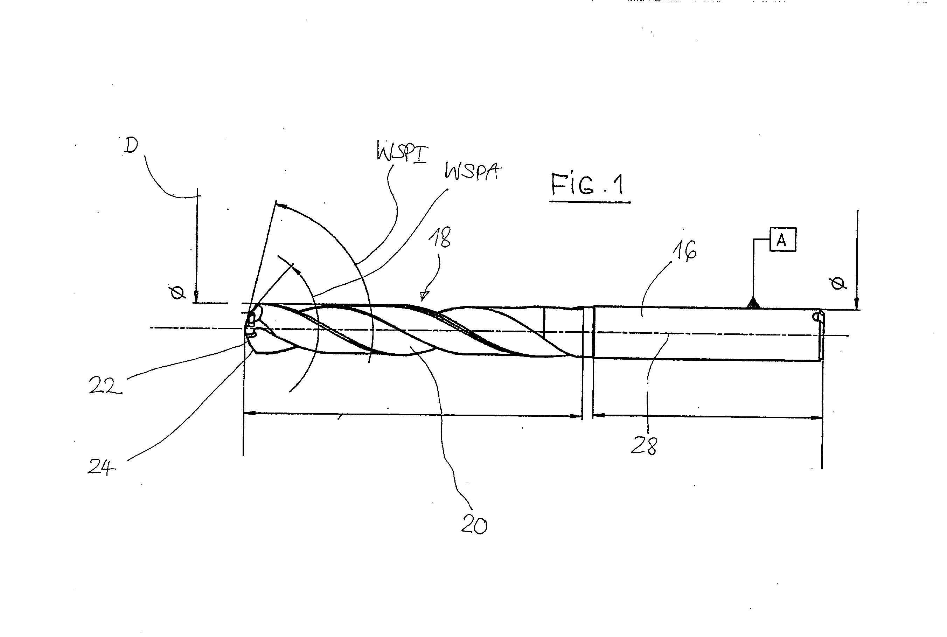

In den Figuren 1 bis 8 ist mit den Bezugszeichen 10 ein Bohrwerkzeug, genauer gesagt ein zweischneidiges Bohrwerkzeug gezeigt, das sich insbesondere zum Bearbeiten von hochzähen Werkstoffen, wie z.B. Stahlguss, Vergütungsstahl oder sonstigen schwer zerspanbaren Stahl-Werkstoffen einschließlich von metallischen Guss-Werkstoffen, wie beispielsweise Grauguss, und insbesondere von GGV oder ADI-Guss eignet, wie sie beispielsweise im Motorenbau unter der Bezeichnung GGV oder ADI eingesetzt werden. Das Werkzeug gemäß Figur 1 bis 8 ist insbesondere hinsichtlich der Bearbeitung von Gusswerkstoffen optimiert.

Im Folgenden wird das Bohrwerkzeug als zweischneidiges Werkzeug beschrieben. Es soll jedoch bereits an dieser Stelle hervorgehoben werden, dass es selbstverständlich auch mehr als zwei Schneiden ausbilden kann. Ferner wird das Werkzeug als ein Werkzeug beschrieben, das insgesamt aus einem einzigen Material, vorzugsweise einem Schnellarbeitsstahl oder einem Hartstoff, hergestellt ist. Es ist jedoch auch hervorzuheben, dass das Bohrwerkzeug selbstverständlich auch aus mehreren Komponenten zusammengesetzt sein kann, wobei beispielsweise der Schaft aus einem Werkzeugstahl (z.B. Schnellarbeitsstahl) bestehen kann, und lediglich diejenigen Abschnitte, die bei der Zerspanung besonders hohen Belastungen ausgesetzt sind, von Hartstoff-Einsätzen gebildet sind.

Als Hartstoff-Materialien können alle gängigen Hartstoffe verwendet werden, die bislang für Hochleistungs-Zerspanungswerkzeuge regelmäßig eingesetzt werden, also insbesondere Vollhartmetall, Cermet-Werkstoffe oder keramikbasierte Werkstoffe.

Obwohl in der Darstellung gemäß Fig. 1 nicht näher gezeigt, ist das Werkzeug 10 mit innenliegenden Kühlkanälen 12 ausgestattet, deren Mündungsöffnungen 14 in den Stirnansichten erkennbar sind.

Das Bohrwerkzeug hat einen Schaft 16 sowie ein Schneidteil 18, in dem zwei wendelförmige Spannuten 20 ausgebildet sind. Die Zeichnung zeigt beispielsweise ein Bohrwerkzeug mit einem Nenndurchmesser von etwa 8 mm. Die Länge L18 des Schneidteils 18 beträgt in diesem Fall etwa 50 mm. Die Länge L16 des Schafts 16 beispielsweise etwa 35 mm.

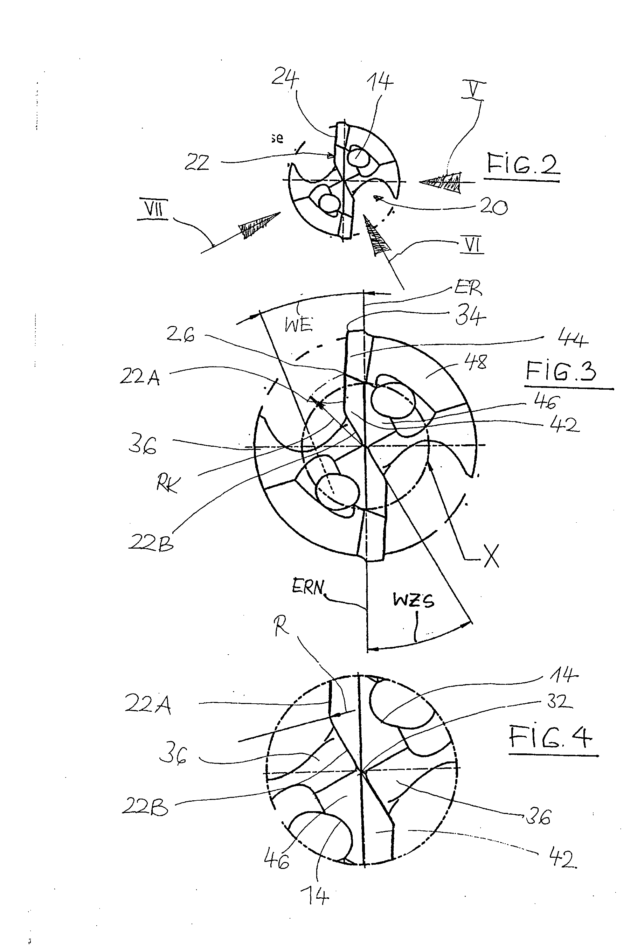

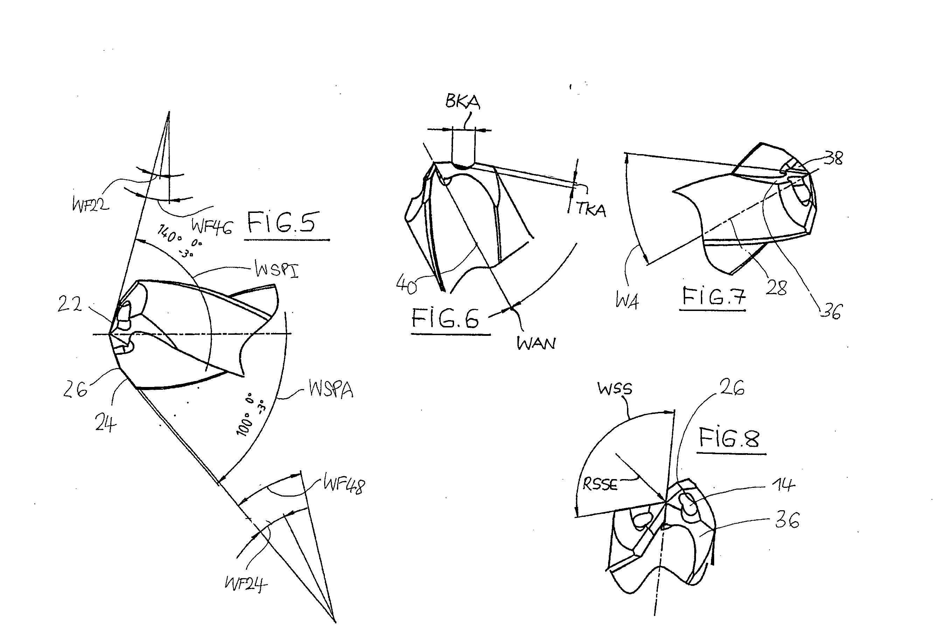

Das erfindungsgemäße Bohrwerkzeug zeichnet sich durch eine besondere Ausgestaltung der Bohrerspitze aus, die in der Weise angeschliffen ist, dass die Hauptschneide zumindest zwei Hauptschneidenabschnitte 22 und 24 aufweist, die jeweils unterschiedliche Spitzenwinkel WSPI und WSPA definieren. Im Einzelnen (siehe Fig. 1 und 5) definiert der radial innere Hauptschneidenabschnitt 22 den Spitzenwinkel WSPI, der vorzugsweise im Bereich zwischen 130 und 150°, besonders bevorzugt bei etwa 140° liegt. Der radial äußere Hauptschneidenabschnitt 24 hingegen legt einen Spitzenwinkel WSPA fest, der erheblich kleiner ist als der Winkel WSPI und vorzugsweise im Bereich zwischen 95 und 115°, bevorzugterweise bei etwa 100° bis 110° liegt. Einzelheiten des Anschliffs werden im Folgenden anhand der Fign. 2 bis 8 näher erläutert.

Man erkennt aus der Darstellung, insbesondere aus der Darstellung gemäß Fig. 3, dass die Hauptschneidenabschnitte 22 und 24 eine annähernd gleiche radiale Erstreckung haben. Mit anderen Worten, eine Knickstelle 26 der Hauptschneide 22, 24 hat von der Achse 28 des Bohrwerkzeugs 10 einen Abstand RK, der im Wesentlichen einem Drittel des Nenndurchmessers D (siehe Fig. 1) des Bohrwerkzeugs entspricht. Vorteilhafterweise ist dieser Abstand RK so gewählt, dass er im Bereich von 0,25 x D und 0,4 x D, vorzugsweise zwischen 0,30 und 0,35 x D liegt, wobei D den Nenndurchmesser des Bohrwerkzeugs bezeichnet.

Wie ferner aus den Figuren ersichtlich, ist der Bohrerkern des Bohrwerkzeugs mit einer Ausspitzung 30 nach Art eines Kreuzanschliffs gemäß DIN 1412 Form C ausgestattet, so dass der radial Innere Hauptschneidenabschnitt 22 in zwei Bereiche 22 A und 22 B unterteilt wird. Der Bereich 22 B verläuft dabei im Winkel zum Bereich 22 A auf das Zentrum, d. h. auf die Achse 28 des Bohrwerkzeugs 10 zu. Der in der Darstellung gemäß Fig. 3 bezeichnete Winkel zwischen dem Schneidenbereich 22B und einer durch die Bohrerachse 28 verlaufenden Ebene ERN, die zur hinteren Kante der Nebenschneide führt, beträgt zwischen 20 und 25°.

Mit der Ausspitzung 30 wird - wie sich am Besten aus der Fig. 4 ergibt - die Querschneide 32 auf eine minimale Länge von beispielsweise einigen 1/100 stel mm reduziert. Das Bohrwerkzeug führt demnach vom Schneideneck 34 bis nahe an das Bohrerzentrum 28 eine schneidende Bewegung aus, wodurch die Vorschubkräfte des Bohrwerkzeugs verringert werden können.

Wie sich auch aus der Fig. 4 ergibt, ist der Übergang zwischen den Abschnitten 22B und 22A des Hauptschneidenabschnitts 22 verrundet, und zwar über einen Radius R der im Bereich zwischen 0,15 und 0,30, vorzugsweise zwischen 0,20 und 0,26 x D liegt. Mit anderen Worten, der Radius R ist also verhältnismäßig groß, was sich als vorteilhaft erwiesen hat, um Überbeanspruchungen an der Übergangsstelle zwischen den Bereichen 22 A und 22 B zu vermeiden.

Die Ausspitzung 30 ist vorteilhafterweise durch eine Schleifscheibe hergestellt, die für den Einschleifvorgang vorzugsweise linear in eine Richtung bewegt wird, die auf der Darstellungsebene der Fig. 8 senkrecht steht. Dementsprechend ist aus dieser Figur auch das Querschnittsprofil der Schleifscheibe ersichtlich, d. h., man erkennt, dass die den Schleifprozess ausführenden Oberflächen der Schleifscheibe einen Winkel WSS von etwa 105° einschließen. Selbstverständlich ist die Schleifscheibe zwischen diesen Flächen nicht mit einer scharfen Kante ausgestattet. Vielmehr ist diese Kante verrundet, wobei der Radius RSSE beispielsweise bei 0,2 mm liegen kann.

Mit der die Ausspitzung 30 herstellenden Schleifscheibe entsteht somit zum einen eine Ausspitzungsfläche 36 und zum anderen eine sich daran im Winkel anschließende Schneidbrustfläche 38 im Bohrerkern. Die Schneidbrustfläche 38 ist - wie man am besten aus der Fig. 6 ersehen kann, zu einer Radialebene 40 des Bohrwerkzeugs entweder parallel oder um einen Winkel WAN von bis zu - 2° angestellt, d. h., sie bildet einen negativen Spanwinkel aus.

Der Fig. 7 ist entnehmbar, dass die Ausspitzungsfläche 36 zur Bohrerachse 28 verhältnismäßig steil angestellt ist. Der Anstellwinkel WA liegt vorzugsweise im Bereich zwischen 33° und 38°.

Der Anschliff des erfindungsgemäßen Bohrwerkzeugs ist darüber hinaus so getroffen, dass den beiden Hauptschneidenabschnitten 22 und 24 gesonderte Hauptfreiflächen 42, 44 zugeordnet sind. Die Hauptfreiflächen 42, 44 sind vorzugsweise von ebenen Flächen gebildet, sie können jedoch auch von gekrümmten Flächen, beispielsweise Konus- oder Kegelmantelflächen gebildet werden sein. Aus der Fig. 5 ist ersichtlich, dass der Freiwinkel WF22 etwa gleich groß gehalten ist wie der Freiwinkel WF24 des radial äußeren Hauptschneidenabschnitts 24. Beispielsweise liegt der Freiwinkel bei etwa 8°.

Wie sich im Einzelnen aus den Fig. 2 und Fig. 3 entnehmen lässt, schließt sich and die Hauptfreiflächen 42, 44 jeweils noch eine weitere Sekundär-Freifläche 46, 48 an. Die Freiwinkel WF46 und WF48 sind wiederum im Wesentlichen gleich groß, betragen allerdings etwa 20°.

Schließlich zeichnet sich das erfindungsgemäße Bohrwerkzeug noch hinsichtlich einer Besonderheit bezüglich der Kühl-/Schmiermittelzuführung aus. Die mit dem Bezugszeichen 14 bezeichneten Mündungsöffnungen der in den Bohrerstegen liegenden Kühlkanäle sind zu den jeweiligen Ausspitzungsflächen 36 hin (siehe insbesondere Fig. 8) frei geschliffen. Hierzu wird vorzugsweise mit dem Außenumfang einer gerundeten Schleifscheibe unter einem Winkel WE von beispielsweise 21° zu einer die Nebenschneide erfassenden Radialebene ER in die Bohrerspitze eingeschliffen, so dass sich - wie am Besten aus den Fig. 2, Fig. 3, Fig. 6 und Fig. 8 ersichtlich - ein Kanalabschnitt ergibt, der sich von der Mündungsöffnung 14 ausgehend zur Ausspitzungsfläche 36 hin etwas erweitert. Die Breite BKA des Kanalabschnitts ist vorzugsweise geringfügig größer als der Durchmesser der innenliegenden Kühlkanäle 14, die Tiefe TKA entspricht in etwa dem halben Durchmesser der innenliegenden Kühlkanäle.

Das erfindungsgemäße Bohrwerkzeug lässt sich auch mit Werkzeugmaschinen herstellen, die hinsichtlich ihrer Ausstattung auf einfache kinematische Bewegungen beschränkt sind. Sämtliche Funktionsflächen des Anschliffs können als ebene Flächen ausgebildet werden.

Versuche mit diesem Bohrwerkzeug bei der Zerspanung von hochfesten und hochzähen metallischen Gusswerkstoffen haben gezeigt, dass die Schneide sehr gleichmäßig belastet wird und dementsprechend eine hohe Standzeit hat. Der Knick in der Schneide hat darüber hinaus positiven Einfluss auf die Spanbildung derart, dass kurze Späne entstehen, über die - unter Zuhilfenahme der MMS-Schmiertechnologie - die Wärme effektiv vom Werkzeug abgeführt wird.

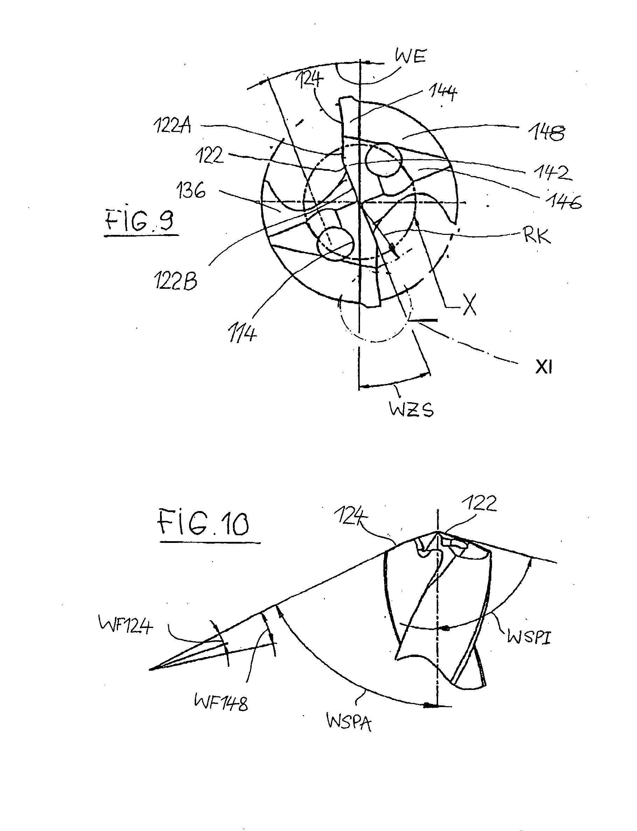

Im Folgenden werden unter Bezug auf die Figuren 9 bis 12 Varianten des erfindungsgemäßen Bohrwerkzeugs beschrieben, die sich im Besonderen für die spanende Bearbeitung von hochzähen Werkstoffen, wie z.B. Stahlguss, Vergütungsstahl oder sonstigen schwer zerspanbaren Stahl-Werkstoffen, aber auch zur Zerspanung von metallischen Guss-Werkstoffen, wie beispielsweise Grauguss, einschließlich GGV oder ADI-Guss.

Bei diesen Ausführungsformen sind Bauelemente und Details, die den Komponenten der zuvor beschriebenen Ausführungsform entsprechen, mit ähnlichen Bezugszeichen versehen, denen jedoch eine "1" bzw. "2" vorangestellt sind.

Das in den Figuren 9 bis 11 dargestellte Bohrwerkzeug 110 entspricht hinsichtlich des Aufbaus und der Schneidengeometrie grundsätzlich im Wesentlichen dem Bohrwerkzeug 10. Unterschiedlich ist der Verlauf der Hauptschneide, die Gestaltung des Schneidenecks und der Spitzenwinkel.

Das Bohrwerkzeug 110 ist wieder in der Weise angeschliffen, dass die Hauptschneide zumindest zwei Hauptschneidenabschnitte 122 und 124 aufweist, die jeweils unterschiedliche Spitzenwinkel WSPI und WSPA definieren. Im Einzelnen (siehe Fig. 10) definiert der radial innere Hauptschneidenabschnitt 122 den Spitzenwinkel WSPI, der vorzugsweise im Bereich zwischen 130 und 150°, besonders bevorzugt bei etwa 140° liegt. Der radial äußere Hauptschneidenabschnitt 124 hingegen legt einen Spitzenwinkel WSPA fest, der wieder kleiner ist als der Winkel WSPI und vorzugsweise im Bereich zwischen 95 und 130°, bevorzugterweise bei etwa 125° liegt. Zu den Einzelheiten bezüglich des Anschliffs (Freiflächen, Querschneide, Ausspitzung) kann - um Wiederholungen zu vermeiden - auf die Beschreibung der Figuren 2 bis 8 Bezug genommen werden. Auch bei dieser Ausführungsform ist die Hauptschneide durch die Ausspitzung 136 korrigiert.

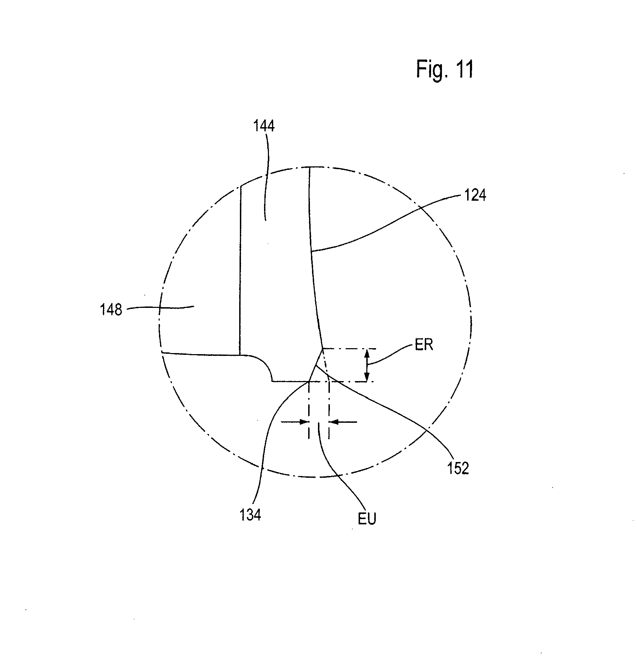

Wie am besten aus der Figur 11 ersichtlich ist, verläuft im weiteren Unterschied zur ersten Ausführungsform die Hauptschneide zumindest im Bereich des radial äußeren Hauptschneidenabschnitts 124 leicht konkav, vorzugsweise so, dass sich auf der gesamten Länge der Hauptschneide kein positiver radialer Spanwinkel ergibt.

Ferner ist das Schneideneck 134 um das Maß EU in Umfangsrichtung zurückgesetzt, was durch Anbringung einer Fase 152 am radial äußeren Hauptschneidenabschnitt 124 erfolgt. Die Fase 152 hat eine Erstreckung (ER) in radialer Richtung, die im Bereich zwischen 0,05 und 0,07xD liegt, und eine Erstreckung in Umfangsrichtung EU, die im Bereich zwischen 0,025 und 0,035xD liegt, wobei D den Nenndurchmesser des Bohrwerkzeugs (10) bezeichnet.

Mit diesem Werkzeug mit einem Durchmesser von 7,7 mm wurden unter Variierung der Spitzenwinkels WSPA für den radial äußeren Hauptschneidenabschnitts bei unveränderten inneren Spitzenwinkel von 140° unfangreiche Bohrversuche mit folgenden Parametern durchgeführt:

| | |
|---|---|
| Werkstoff: | Vollhartmetall VHM |
| Schnittgeschwindigkeit: | 120 m/min |
| Drehzahl: | 4960 U/min |
| Vorschubgeschwindigkeit: | 992 mm/min |
| Bohrungstiefe: | 38 mm |
| Kühlung: | Innenkühlung MMS |
| Kühlschmierstoff: | Emulsion 8% |
| Druck/Volumen: | 48,5 bar/13,4 l/min |

Es wurde in eine Platte aus 42CrMo4 mit einer Festigkeit von 1000 N/mm² gebohrt und der Standweg Lf des Werkzeugs überwacht. Als Kriterium für den Abbruch des Versuchs wurde der Werkzeugbruch bzw. ein Grenz-Verschleiß an den Hauptschneidenabschnitten von 360µm festgelegt.

Als Ergebnis zeigte sich, dass sich die besten Standwege Lf (in m) zwischen 90 und 110 mit einem äußeren Spitzenwinkel WSPA im Bereich zwischen 115 und 125° ergeben, wobei sich bei Winkelbereichen um 125° die beste Vergleichmäßigung des Verschleißes zeigte. Aber selbst mit Spitzenwinkelwerten in den Grenzbereichen von 95° bzw. 130° konnten noch Standweg-Werte Lf von über 50 erzielt werden.

Obwohl die Versuche mit einem VHM-Werkzeug durchgeführt wurden, lassen die Versuchsergebnisse den berechtigten Schluss zu, dass die erfindungsgemäße Werkzeuggeometrie auch dann zu erheblich verbesserten Standzeiten führt, wenn als Werkstoff Schnellstahl, wie HSS oder HSS-E verwendet wird.

Wenn Hartstoffe zum Einsatz kommen, ergibt sich ein weiterer besonderer Vorteil. Der Doppel-Spitzenwinkel des Bohrwerkzeugs mit einem Spitzenwinkel im Zentrum im Bereich von etwa 140° und einem Spitzenwinkel in dem an das Schneideneck anschließenden Bereich im Bereich von über 95° erlaubt eine äußerst gute Materialausbeute bei der Herstellung des Anschliffs aus einem Hartstoff-Rohling. Das Werkzeug wird auf diese Weise selbst dann wirtschaftlich herstellbar, wenn extrem teure Hartstoffe, wie z. B. Feinstkorn-Hartmetall oder Cermet -Werkstoffe verwendet werden.

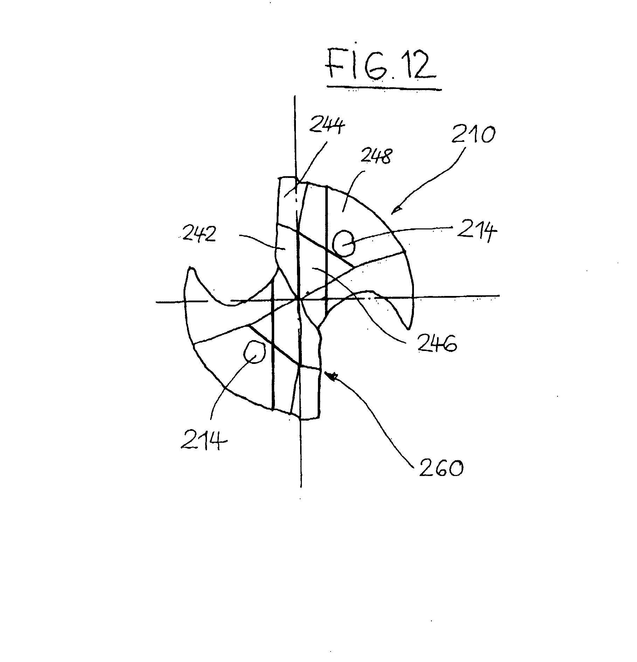

Unter Bezug auf die Figur 12 wird schließlich noch eine weitere Abwandlung des Werkzeugs beschrieben. Dieses Werkzeug entspricht hinsichtlich des Anschliffs demjenigen der vorstehend beschriebenen Ausführungsbeispiele. Die Besonderheit besteht darin, dass alle an der Zerspanung beteiligten Abschnitte des Werkzeugs 210 an einer Schneideinsatzplatte 260 ausgebildet sind, die in einer diametralen Ausnehmung im Schneideinsatzhalter aufgenommen, z.B. lösbar befestigt ist. Diese Konstruktion erlaubt es, nur die Schneideinsatzplatte aus hochfestem Material, wie Schnellstahl oder Hartstoff auszubilden, wodurch es gelingt, das Werkzeug auch wirtschaftlich für die Bearbeitung größerer Durchmesser einzusetzen. Die innenliegenden Kühlkanäle 214 sind bei dieser Ausführungsform etwas zu versetzen, damit die Mündungsöffnungen nicht von der Schneideinsatzplatte verdeckt werden. In weiterer Abwandlung zu den zuvor beschriebenen Ausführungsformen sind die Mündungen der innenliegenden Kühlkanäle 214 nicht frei geschliffen.

Selbstverständlich sind Abweichungen von dem zeigten Ausführungsbeispiel möglich ohne den Grundgedanken der Erfindung zu verlassen. Es können z.B. auch mehr als zwei unterschiedliche Spitzenwinkel angeschliffen werden, wobei die Winkel sich von innen nach außen zunehmend verkleinern.

Es können auch mehr als zwei Hauptschneiden vorhanden sein. Auch die Art der Ausspitzung ist nicht auf einen Kreuzanschliff nach DIN 1412 Form C beschränkt. Es können auch andere Ausspitzungen mit und ohne korrigierte Hauptschneide verwendet werden. Auch die Ausspitzungsflächen können von leicht gekrümmten Flächen gebildet sein.

Auch kann das Werkzeug aus mehreren Teilen aufgebaut sein, wobei der Schaft und der überwiegende Teil des Schneidteils aus einem Werkzeugstahl wie z. B. HSS oder HSS-E, hergestellt sein und das Werkzeug mit einem Schneideeinsatz aus einem Hartstoff bestückt werden kann.

Die Erfindung schafft somit ein mehrschneidiges Bohrwerkzeug, wie es insbesondere zum Bearbeiten von schwer zerspanbaren, z.B. hochzähen Werkstoffen, wie z.B. Stahlguss, Vergütungsstahl oder sonstigen schwer zerspanbaren Stahl-Werkstoffen einschließlich von metallischen Guss-Werkstoffen, wie beispielsweise Grauguss, und insbesondere von GGV oder ADI-Guss geeignet ist. Der Anschliff ist dabei so gestaltet, dass die Hauptschneide zumindest zwei Hauptschneidenabschnitte aufweist, die unterschiedlich große Spitzenwinkel definieren. Der radial äußere Spitzwinkel ist dabei kleiner als der radial Innere, wodurch sich ein gutes Zerspanungsverhalten bei großer Lebensdauer des Werkzeugs erzielen lässt.

## Patentansprüche

1. Mehrschneidiges Bohrwerkzeug, insbesondere zum Bearbeiten von schwer zerspanbaren Werkstoffen einschließlich Gusswerkstoffen, wobei der Anschliff so gestaltet ist, dass die Hauptschneide (22, 24) zumindest zwei Hauptschneidenabschnitte (22, 24) aufweist, die unterschiedlich große Spitzenwinkel (WSPI, WSPA) definieren, von denen der radial äußere Spitzenwinkel (WSPA) kleiner ist als der radial innere (WSPI), **dadurch gekennzeichnet, dass** der radial äußere Hauptschneidenabschnitt (24) einen Spitzenwinkel (WSPA) im Bereich zwischen 95 und 130°, vorzugsweise im Bereich zwischen 115 und 125°, und der radial innere Hauptschneidenabschnitt (22) einen Spitzenwinkel (WSPI) im Bereich zwischen 130 bis 150°, vorzugsweise von etwa 140° definiert, wobei eine zwischen den beiden Hauptschneidenabschnitten (22, 24) liegende Knickstelle (26) der Hauptschneide (22, 24) von der Bohrerachse (28) einen Abstand (RK) hat, der im Bereich zwischen 0,30 und 0,35 x D liegt, wobei D den Nenndurchmesser des Bohrwerkzeugs (10) bezeichnet, so dass die unter einem verschieden großen Winkel zur Achse des Bohrwerkzeugs verlaufenden Hauptschneidenabschnitte (22, 24) außerhalb des Bohrerkerns in etwa gleich groß werden.

2. Bohrwerkzeug nach Anspruch 1, **dadurch gekennzeichnet, dass** der radial innere Hauptschneidenabschnitt (22) in axialer Richtung von der Bohrerspitze betrachtet zum Bohrerzentrum (28) hin abgewinkelt verläuft.

3. Bohrwerkzeug nach Anspruch 2, **dadurch gekennzeichnet, dass** die Abwinkelung des radial inneren Hauptschneidenabschnitts (22) verrundet ist, wobei der Rundungsradius im Bereich zwischen 0,2 und 0,26xD liegt und D den Nenndurchmesser des Bohrwerkzeugs (10) bezeichnet.

4. Bohrwerkzeug nach Anspruch 2 oder 3, **dadurch gekennzeichnet, dass** der zur Bohrerspitze abgewinkelte Teil (22B) des radial inneren Hauptschneidenabschnitts (22) von einer Ausspitzung (30) nach Art eines Kreuzanschliffs gebildet ist.

5. Bohrwerkzeug nach einem der Ansprüche 1 bis 4, **dadurch gekennzeichnet, dass** den beiden Hauptschneidenabschnitten (22, 24) jeweils gesonderte Hauptfreiflächen (42, 44) zugeordnet sind, über die die jeweiligen Freiwinkel (WF22, WF24) individuell festlegbar sind.

6. Bohrwerkzeug nach Anspruch 5, **dadurch gekennzeichnet, dass** die den Hauptschneidenabschnitten (22, 24) zugeordneten Hauptfreiflächen jeweils von zwei Flächen (42, 46 und 44, 48) gebildet sind, von denen die dem Hauptschneidenabschnitt (22, 24) benachbarte Fläche (42, 44) einen kleineren Spanwinkel (WF22, WF24) als die andere Fläche (46, 48) definiert.

7. Bohrwerkzeug nach einem der Ansprüche 1 bis 6, **dadurch gekennzeichnet, dass** zumindest der radial äußere Hauptschneidenabschnitt (24) in axialer Richtung betrachtet konvex verläuft.

8. Bohrwerkzeug nach einem der Ansprüche 1 bis 6, **dadurch gekennzeichnet, dass** zumindest der radial äußere Hauptschneidenabschnitt (124) in axialer Richtung betrachtet konkav verläuft.

9. Bohrwerkzeug nach einem der Ansprüche 1 bis 8, **gekennzeichnet durch** innenliegende Kühl-/Schmiermittelkanäle, die in der Hauptfreifläche (46, 48) austreten.

10. Bohrwerkzeug nach Anspruch 9, **dadurch gekennzeichnet, dass** die jeweilige Mündungsöffnung (14) des innenliegenden Kühl-/Schmiermittelkanals zur Spannut (20) freigeschliffen ist.

11. Bohrwerkzeug nach einem der Ansprüche 1 bis 10, **dadurch gekennzeichnet, dass** der radial äußere Hauptschneidenabschnitt () im Bereich des Schneidenecks (134) eine Fase (152) hat, deren Erstreckung (ER) in radialer Richtung im Bereich zwischen 0,05 und 0,07xD und deren Erstreckung in Umfangsrichtung EU im Bereich zwischen 0,025 und 0,035xD liegt, wobei D den Nenndurchmesser des Bohrwerkzeugs (10) bezeichnet.

12. Bohrwerkzeug nach einem der Ansprüche 1 bis 11, **gekennzeichnet durch** wendelförmige Spannuten (20).

13. Bohrwerkzeug nach einem der Ansprüche 1 bis 12, **dadurch gekennzeichnet, dass** es zumindest teilweise aus Schnellstahl, wie z. B. HSS oder HSS-E besteht.

14. Bohrwerkzeug nach einem der Ansprüche 1 bis 13, **dadurch gekennzeichnet, dass** es zumindest im Schneidenbereich als Hartstoff-, wie z. B. als Vollhartmetall-(VHM)werkzeug ausgebildet ist, wobei vorzugsweise der Hartstoff, aus dem das Bohrwerkzeug zumindest im schneidennahen Bereich besteht, ein Feinkorn-Hartmetall ist.

15. Bohrwerkzeug nach einem der Ansprüche 1 bis 14, **dadurch gekennzeichnet, dass** die Schneiden des Bohrwerkzeugs (210) von einem Schneideinsatz (260) gebildet sind, der aus einem hochfesten Werkstoff, wie HSS, HSSE oder einem Hartstoff, wie z. B. Hartmetall besteht.

16. Verwendung des Bohrwerkzeugs nach einem der Ansprüche 1 bis 15 zur Bearbeitung von hochzähen Werkstoffen, wie z. B. Stahlguss, Vergütungsstahl oder sonstigen schwer zerspanbaren Stahl-Werkstoffen einschließlich von metallischen Guss-Werkstoffen, wie beispielsweise Grauguss, und insbesondere von GGV oder ADI-Guss.

## Claims

1. Multiple edge drill, in particular used for machining materials, including cast steel materials, which are difficult to machine, wherein pointing of said drill is formed such that the main cutting edge (22, 24) comprises at least two main cutting edge sections (22, 24) which define different tip angles (WSPI, WSPA), the radial outer tip angle (WSPA) thereof being smaller than the radial inner tip angle (WSPI), **characterized in that** said radial outer main cutting edge section (24) has a tip angle (WSPA) in the range between 95 and 130°, preferably in the range between 115 and 125°, and said radial inner main cutting edge section (22) has a tip angle (WSPI) in the range between 130 and 150°, preferably of about 140°, wherein a buckle point (26) of said main cutting edge (22, 24) lying between said both main cutting edge sections (22, 24) has a distance (RK) from the drill axis (28) which lies in the range between 0,30 and 0,35 x D, D designating the nominal diameter of said drill (10), so that said main cutting edge sections (22, 24) outside the core of said drill and running under a different angle with respect to the axis of the drill become substantially of equal value.

2. Drill according to claim 1, **characterized in that** said radial inner main cutting edge section (22), when seen in axial direction from the drill tip, runs in an angled manner towards said drill center (28).

3. Drill according to claim 2, **characterized in that** said angling of said radial inner main cutting edge section (22) is rounded, wherein the rounding radius lies in the range between 0,2 and 0,26 x D, D designating the nominal diameter of the drill (10).

4. Drill according to claim 2 or 3, **characterized in that** said part (22B) of said radial inner main cutting edge section (22) angled toward said drill tip is formed from a web thinning (30) in a manner of a cross web thinning.

5. Drill according to one of the claims 1 to 4, **characterized in that** individual main flank surfaces (42, 44) are assigned each to both main cutting edge sections (22, 24), by which main flank surfaces the respective clearance angles (WF22, WF24) are individually establishable.

6. Drill according to claim 5, **characterized in that** said main flank surfaces assigned to said main cutting edge sections (22, 24) are formed each by two surfaces (42, 46 and 44, 48), the first surface (42, 44) being adjacent to the main cutting edge section (22, 24) having a smaller clearance angle (WF22, WF24) than the other surface (46, 48).

7. Drill according to one of the claims 1 to 6, **characterized in that** at least the radial outer main cutting edge section (24) runs, when viewed in the axial direction, in a convex manner.

8. Drill according to one of the claims 1 to 6, **characterized in that** at least the radial outer main cutting edge section (124) runs, when viewed in axial direction, in a concave manner.

9. Drill according to one of the claims 1 to 8, **characterized by** internal coolant/lubricant ducts merging into the main flank surface (46, 48).

10. Drill according to claim 9, **characterized in that** the respective discharge openings (14) of the internal coolant/lubricant ducts continue in a ground section towards the respective flute (20).

11. Drill according to one of the claims 1 to 10, **characterized in that** the radial outer main cutting edge section in the area of the cutting edge corner (134) has a chamfered face (152) which has a radial extension (ER) in the range between 0,05 and 0,07 x D and a circumferential extension EU in the range between 0,025 and 0,035 x D, wherein D designates the nominal diameter of the drill (10).

12. Drill according to one of the claims 1 to 11, **characterized by** helical flutes (20).

13. Drill according to one of the claims 1 to 12, **characterized in that** it consists at least partly of high-speed steel, such as HSS or HSS-E.

14. Drill according to one of the claims 1 to 13, **characterized in that** it is formed at least in the area of the cutting edge as a hard material, i. e. a full carbide (VHM) tool, wherein preferably said hard material from which that drill is formed at least in the area close to the cutting edge, is a fine-grained carbide material.

15. Drill according to one of the claims 1 to 14, **characterized in that** the cutting edges of the drill (210) are formed by a cutting-edge insert (260), the cutting-edge insert comprising a high-strength material such as HSS, HSSE or a hard material, e. g. carbide material.

16. Use of the drill according to one of the claims 1 to 15 for machining highly tough materials, such as cast steel, quenched steel or other steel materials which are difficult to machine including metallic cast materials, e. g. cast iron and in particular GGV or ADI-cast iron.

## Revendications

1. Outil de perçage à plusieurs lames, servant en particulier à traiter des matériaux difficiles à usiner par enlèvement de copeaux, y compris des matériaux de fonte, dans lequel l'affûtage est configuré de telle sorte que la lame principale (22, 24) présente au moins deux segments de lame principale (22, 24), qui définissent différemment de grands angles de pointe (WSPI, WSPA), parmi lesquels l'angle de pointe radialement extérieur (WSPA) est plus petit que l'angle de pointe radialement intérieur (WSPI), **caractérisé en ce que** le segment de lame principale (24) radialement extérieur définit un angle de pointe (WSPA) situé dans la plage comprise entre 95 et 130°, de préférence dans la plage comprise entre 115 et 125°, et **en ce que** le segment de lame principale (22) radialement intérieur définit un angle de pointe (WSPI) situé dans la plage comprise entre 130 et 150°, de préférence un angle de pointe d'environ 140°, dans lequel un point de pliage (26), situé entre les deux segments de lame principale (22, 24), de la lame principale (22, 24) présente par rapport à l'axe de foret (28) un espacement (RK), qui est situé dans la plage comprise entre 0,30 et 0,35 x D, dans lequel D désigne le diamètre nominal de l'outil de perçage (10) si bien que les segments de lame principale (22, 24) s'étendant selon un angle présentant une dimension différente par rapport à l'axe de l'outil de perçage présentent à l'extérieur de l'âme de foret une dimension approximativement égale.

2. Outil de perçage selon la revendication 1, **caractérisé en ce que** le segment de lame principale (22) radialement intérieur s'étend, selon une observation dans une direction axiale depuis la pointe de foret, de manière coudée en direction du centre de foret (28).

3. Outil de perçage selon la revendication 2, **caractérisé en ce que** le coudage du segment de lame principale radialement intérieur (22) est arrondi, dans lequel le rayon d'arrondi est situé dans la plage comprise entre 0,2 et 0,26 x D et que D désigne le diamètre nominal de l'outil de perçage (10).

4. Outil de perçage selon la revendication 2 ou 3, **caractérisé en ce que** la partie (22B), coudée par rapport à la pointe de foret, du segment de lame principale (22) radialement intérieur est formée par un appointissage (30) à la manière d'un affûtage croisé.

5. Outil de perçage selon l'une quelconque des revendications 1 à 4, **caractérisé en ce que** respectivement des surfaces dégagées principales (42, 44) séparées sont associées à deux segments de lame principale (22, 24), par l'intermédiaire desquelles les angles dégagés (WF22, WF24) respectifs peuvent être fixés de manière individuelle.

6. Outil de perçage selon la revendication 5, **caractérisé en ce que** les surfaces dégagées principales associées aux segments de lame principale (22, 24) sont respectivement formées par deux surfaces (42, 46 et 44, 48), parmi lesquelles la surface (42, 44) adjacente au segment de lame principale (22, 24) définit un angle de coupe (WF22, WF24) plus petit que l'autre surface (46, 48).

7. Outil de perçage selon l'une quelconque des revendications 1 à 6, **caractérisé en ce qu'**au moins le segment de lame principale (24) radialement extérieur s'étend de manière convexe selon une observation dans une direction axiale.

8. Outil de perçage selon l'une quelconque des revendications 1 à 6, **caractérisé en ce qu'**au moins le segment de lame principale (124) radialement extérieur s'étend de manière concave selon une observation dans une direction axiale.

9. Outil de perçage selon l'une quelconque des revendications 1 à 8, **caractérisé par** des canaux d'agent de refroidissement/de lubrification situés à l'intérieur, lesquels sortent dans la surface dégagée principale (46, 48).

10. Outil de perçage selon la revendication 9, **caractérisé en ce que** l'ouverture d'embouchure (14) respective du canal d'agent de refroidissement/de lubrification situé à l'intérieur est dégagée par meulage afin de former une rainure de coupe (20).

11. Outil de perçage selon l'une quelconque des revendications 1 à 10, **caractérisé en ce que** le segment de lame principale () radialement extérieur est doté, dans la zone du coin de lame (134), d'un biseau (152), dont l'extension dans une direction radiale (ER) est située dans la plage comprise entre 0,05 et 0,07 x D et dont l'extension dans la direction périphérique (EU) est située dans la plage comprise entre 0,025 et 0,035 x D, dans lequel D désigne le diamètre nominal de l'outil de perçage (10).

12. Outil de perçage selon l'une quelconque des revendications 1 à 11, **caractérisé par** des rainures de coupe (20) présentant une forme hélicoïdale.

13. Outil de perçage selon l'une quelconque des revendications 1 à 12, **caractérisé en ce qu'**il est constitué au moins en partie d'un acier rapide, tel que de l'acier HSS ou de l'acier HSS-E.

14. Outil de perçage selon l'une quelconque des revendications 1 à 13, **caractérisé en ce qu'**il est réalisé dans la zone des lames sous la forme d'un outil en matière dure, tel qu'un outil en carbure monobloc, dans lequel de préférence la matière dure, de laquelle l'outil de perçage est constitué au moins dans la zone située à proximité des lames, est un métal dur à grains fins.

15. Outil de perçage selon l'une quelconque des revendications 1 à 14, **caractérisé en ce que** les lames de l'outil de perçage (210) sont formées par un insert de découpage (260), qui est constitué d'un matériau à haute résistance, tel qu'un matériau HSS, HSSE ou d'une matière dure telle que du métal dur.

16. Utilisation de l'outil de perçage selon l'une quelconque des revendications 1 à 15 servant à traiter des matériaux à haute ductilité, tel que de l'acier coulé, de l'acier d'amélioration ou d'autres matériaux à base d'acier difficiles à usiner par enlèvement de copeaux, y compris des matériaux de coulée métalliques, tels que de la fonte grise, en particulier du graphite vermiculaire ou de la fonte ADI.
